# EUROPÄISCHE PATENTSCHRIFT

(11) **EP 2 138 427 B1**
(45) Veröffentlichungstag und Bekanntmachung des Hinweises auf die Patenterteilung: **11.07.2012**
(21) Anmeldenummer: 09006438.7
(22) Anmeldetag: 13.05.2009
(51) Int. Cl.: B65G 1/04

(54) **Lastaufnahmemittel zur Ein- und Auslagerung von Lasten an bzw. von Lagerplätzen einer Regalanordnung**
Load bearer for loading and unloading loads into or out of storage areas of a shelf assembly
Moyen de réception de charge destiné à charger et décharger des charges sur ou à partir de places de stockage d'un agencement d'étagères

(30) Priorität: 24.06.2008 DE 202008008350 U
(43) Veröffentlichungstag der Anmeldung: 30.12.2009
(73) Patentinhaber: Westfalia Intralogistic GmbH, 33428 Harsewinkel (DE)
(72) Erfinder: Kraft, Jürgen, 33330 Gütersloh (DE); Kleinewietfeld, Hubert, 33397 Rietberg (DE)
(74) Vertreter: Wagner, Carsten

(56) Entgegenhaltungen:
- EP-A- 1 925 572
- DE-A1- 2 553 221
- DE-A1- 3 106 137
- US-A1- 2005 065 636

## Beschreibung

Die Erfindung betrifft ein Lastaufnahmemittel der im Oberbegriff des Anspruchs 1 genannten Art zur Ein-und Auslagerung von Lasten an bzw. von Lagerplätzen einer Regalanordnung.

Ein Lastaufnahmemittel der betreffenden Art und gemäss dem Oberbegriff des Anspruchs 1 ist durch WO 03/040021 A1 bekannt und weist einen an Tragseilen aufgehängten Grundkörper auf. Die dem Grundkörper abgewandten Enden der Tragseile sind mit einer krankatzenartigen Aufhängung verbunden, wobei durch Veränderung der Länge der Tragseile, beispielsweise durch Auf- bzw. Abwickeln der Tragseile von einer jeweiligen bzw. auf eine jeweilige motorisch betriebene Wickeltrommel, das Lastaufnahmemittel angehoben bzw. abgesenkt werden kann, so daß auf diese Weise eine Hubachse definiert ist. Die krankatzenartige Aufhängung ist in der Regel in einer zu der Hubachse senkrechten Ebene verfahrbar, so daß durch entsprechendes Verfahren der Aufhängung und entsprechendes Anheben bzw. Absenken des Lastaufnahmemittels dasselbe innerhalb einer Regalanordnung, beispielsweise innerhalb eines Hochregallagers, vor den einzelnen Lagerplätzen positioniert werden kann, um auf dem Lastaufnahmemittel angeordnete Lasten an einem Lagerplatz der Regalanordnung einzulagern oder an dem Lagerplatz eingelagerte Lasten aufzunehmen und mittels des Lastaufnahmemittels zu einer anderen Stelle innerhalb der Regalanordnung zu transportieren.

Aufgrund der Aufhängung des Grundkörpers an Tragseilen führt das Lastaufnahmemittel während einer Bewegung der Aufhängung Pendelschwingungen relativ zu der Aufhängung aus. Das bekannte Lastaufnahmemittel weist ferner an gegenüberliegenden Längsrändern des Grundkörpers angeordnete Stützelemente zur Abstützung des Grundkörpers an der Regalanordnung während eines Ein- bzw. Auslagerungsvorganges auf. Bei dem bekannten Lastaufnahmemittel sind die Stützelemente in Bezug zu dem jeweiligen Längsrand des Grundkörpers aus- bzw. einfahrbar ausgebildet, wobei als Antrieb für die einzelnen Stützelemente jeweils eine Zahnstangen-Ritzel-Anordnung vorgesehen ist. Durch die Abstützung des Grundkörpers an der Regaleinheit werden während eines Ein-und Auslagerungsvorganges auftretende Kräfte wenigstens teilweise von der Regalanordnung aufgenommen. Bei dem aus der Druckschrift bekannten Lastaufnahmemittel sind die Stützelemente als Arretierungselemente ausgebildet, die in ihrer Arretierungsposition, in der die Stützelemente ausgefahren sind, formschlüssig in entsprechende Aufnahmen an der Regalanordnung eingreifen. Auf diese Weise sind Bewegungen des Lastaufnahmemittels relativ zu der Regalanordnung während eines Ein- bzw. Auslagerungsvorganges vermieden.

Ein ähnliches Lastaufnahmemittel ist auch aus der DE-OS 25 53 221 bekannt. Bei dem aus dieser Druckschrift bekannten Lastaufnahmemittel sind die Stütz-elemente als Stützarme ausgebildet, die in Bezug auf die Längsränder des Grundkörpers des Lastaufnahmemittels ein- bzw. ausfahrbar sind und im ausgefahrenen Zustand in Aufnahmeöffnungen eingreifen, die an der Regalanordnung gebildet sind.

Der Erfindung liegt die Aufgabe zugrunde, ein Lastaufnahmemittel der im Oberbegriff des Anspruchs 1 genannten Art anzugeben, dessen Flexibilität hinsichtlich der Ein- bzw. Auslagerung von Lasten an bzw. von Lagerplätzen einer Regalanordnung erhöht ist.

Diese Aufgabe wird durch die im Anspruch 1 angegebene Erfindung gelöst.

Die Erfindung geht von einem Lastaufnahmemittel aus, das sich während eines Ein- bzw. Auslagerungsvorganges mittels Stützelementen an der Regalanordnung abstützt. Der Grundgedanke der Erfindung besteht darin, das Lastaufnahmemittel so zu gestalten, daß die Lage eines Abstützpunktes, in dem sich der Grundkörper mittels des jeweiligen Stützelementes an der Regalanordnung abstützt, entlang des jeweiligen Längsrandes des Lastaufnahmemittels variabel ist. Hierzu sieht die Erfindung vor, daß wenigstens eines der Stützelemente entlang des jeweiligen Längsrandes verstellbar ist und daß dem Stützelement ein Verstellantrieb zugeordnet ist. Mittels des Verstellantriebes ist das jeweilige Stützelement entlang des zugeordneten Längsrandes verstellbar, so daß der Abstützpunkt entsprechend dem jeweiligen Belegungszustand eines Lagerplatzes frei wählbar ist.

Soll beispielsweise mittels des Lastaufnahmemittels eine an einem Lagerplatz eingelagerte Euro-Palette ausgelagert werden, so wird das Lastaufnahmemittel so verfahren, daß es sich vor dem entsprechenden Regal befindet. Die Lage der Stützelemente relativ zu dem zugeordneten Längsrand wird hierbei so gewählt, daß die Stützelemente, die beispielsweise und insbesondere in Bezug auf den jeweiligen Längsrand ein- bzw. ausfahrbar sind, so positioniert sind, daß die Stützelemente weder mit der auszulagernden Euro-Palette noch mit einer daneben eingelagerten Euro-Palette kollidieren. Stützt sich beispielsweise ein Stützelement unmittelbar neben der auszulagernden Euro-Palette an der Regalanordnung ab, so wird der Abstand der Stützelemente entlang des betreffenden Längsrandes vorzugsweise größer als die Breite der Euro-Palette eingestellt.

Soll demgegenüber mittels des Lastaufnahmemittels eine Industriepalette ein- bzw. ausgelagert werden, so wird aufgrund der größeren Breite der Industriepalette ein größerer Abstand zwischen den Stützelementen eines Längsrandes erforderlich. Durch entsprechende Verstellung der dem betreffenden Längsrand zugeordneten Stützelemente relativ zueinander wird der erforderliche größere Abstand erreicht.

Auf diese Weise ist hinsichtlich der Ein- und Auslagerung von Lasten eine große Flexibilität erzielt, indem die Lage der Abstützpunkte des Grundkörpers an der Regalanordnung durch entsprechende Verstellung der Stützelemente relativ zueinander und zu dem Grundkörper frei wählbar ist. Auf diese Weise ist es insbesondere möglich, mittels des erfindungsgemäßen Lastaufnahmemittels Ein- bzw. Auslagerungsvorgänge sowohl in sogenannten Dreifeld-Lageranordnungen als auch in sogenannten Zweifeld-Lageranordnungen auszuführen.

Ein weiterer Vorteil der Erfindung besteht darin, daß aufgrund der Verstellbarkeit wenigstens eines der Stützelemente an dem zugeordneten Längsrand die Stützelemente relativ zueinander und zu dem Grundkörper so positioniert werden können, daß Kollisionen der Stütz-elemente mit in der Regalanordnung eingelagerten Lasten zuverlässig vermieden sind.

Erfindungsgemäß können anstelle von Tragseilen zur Verbindung zwischen einer Aufhängung und dem Lastaufnahmemittel auch andere flexible Verbindungsmittel, beispielsweise ketten- oder bandförmige Verbindungsmittel verwendet werden.

Erfindungsgemäß ist es grundsätzlich ausreichend, wenn sich bei einer Verstellung eines Stützelementes entlang des jeweiligen Längsrandes die Position des dem Grundkörper abgewandten Endes des Stützelementes relativ zu dem Längsrand verändert. Dies kann beispiels-weise dadurch erreicht werden, daß die Stützelemente schwenkbar an dem Grundkörper angeordnet sind, so daß das Stützelement entsprechend der jeweiligen Schwenklage bei gleicher Position des Lastaufnahmemittels relativ zu der Regalanordnung an unterschiedlichen Stellen der Regalanordnung zur Auflage gelangt. Eine außerordentlich vorteilhafte Weiterbildung der Erfindung sieht vor, daß das Stützelement entlang einer linearen Verstellachse verstellbar ist. Bei dieser Ausführungsform sind die Freiheiten bei der Wahl der Position des Stützelementes an dem zugeordneten Längsrand besonders groß und lediglich durch den Verstellhub des Verstellantriebes begrenzt. Ein weiterer Vorteil dieser Ausführungsform besteht darin, daß Verstellantriebe zur Verstellung des Stützelementes entlang einer linearen Verstellachse relativ einfach im Aufbau und damit relativ kostengünstig sind.

Eine vorteilhafte Weiterbildung der vorgenannten Ausführungsform sieht vor, daß die lineare Verstellachse zur Längsmittelebene des Grundkörpers im wesentlichen parallel verläuft.

Entsprechend den jeweiligen Anforderungen kann ein beliebiger geeigneter Verstellantrieb vorgesehen sein, beispielsweise ein pneumatisch oder hydraulisch arbeitender Verstellantrieb. Eine vorteilhafte Weiterbildung der Erfindung sieht insoweit vor, daß der Verstellantrieb ein elektromotorischer Verstellantrieb ist. Entsprechende Elektromotoren stehen als relativ einfache und kostengünstige Standardbauteile zur Verfügung. Ein weiterer Vorteil dieser Ausführungsform besteht darin, daß der Verstellantrieb ausschließlich mit elektrischer Energie versorgt werden muß. Im Vergleich zu pneumatischen oder hydraulischen Antrieben ergibt sich dadurch ein wesentlich einfacherer Aufbau des Lastaufnahmemittels.

Erfindungsgemäß ist es grundsätzlich ausreichend, wenn an wenigstens einem der Längsränder wenigstens ein entlang des Längsrandes verstellbares Stützelement vorgesehen ist. Bei einer solchen Ausführungsform können also an einem Längsrand beispielsweise ein ortsfestes und ein verstellbares Stützelement angeordnet sein. Bei einer solchen Ausführungsform wird somit ein erforderlicher Abstand zwischen den Stützelementen dadurch eingestellt, daß das verstellbare Stützelement relativ zu dem ortsfesten Stützelement entsprechend verstellt wird. Um die Flexibilität des Lastaufnahmemittels hinsichtlich der Wahl des Abstützpunktes weiter zu erhöhen, sieht eine vorteilhafte Weiterbildung der Erfindung vor, daß an wenigstens einem der Längsränder des Grundkörpers wenigstens zwei entlang des Längsrandes verstellbare Stützelemente vorgesehen sind. Sind einem Längsrand beispielsweise zwei Stützelemente zugeordnet, so sind bei dieser Ausführungsform beide Stützelemente verstellbar.

Entsprechend den jeweiligen Anforderungen kann es erfindungsgemäß auch ausreichend sein, wenn an einem der Längsränder bezogen auf die Längsrichtung des Lastaufnahmemittels lediglich ortsfeste Stützelemente angeordnet sind, während an dem anderen Längsrand wenigstens ein entlang des Längsrandes verstellbares Stützelement angeordnet ist. Zur weiteren Erhöhung der Flexibilität hinsichtlich der Wahl der Abstützpunkte sieht eine andere Weiterbildung der Erfindung vor, daß an jedem der Längsränder wenigstens ein entlang des jeweiligen Längsrandes verstellbares Stützelement angeordnet ist.

Zweckmäßigerweise sind Steuerungsmittel zur Ansteuerung des Verstellantriebes bzw. der Verstellantriebe vorgesehen. Erfindungsgemäß ist es ausreichend, wenn sämtlichen verstellbaren Stützelementen ein gemeinsamer Verstellantrieb zugeordnet ist. Erfindungsgemäß ist es jedoch auch möglich, jeden einzelnen verstellbaren Stützelement oder wenigstens einzelnen der Stützelemente einen separaten Verstellantrieb zuzuordnen.

Eine vorteilhafte Weiterbildung der vorgenannten Ausführungsform sieht vor, daß eine Verstellung von wenigstens zwei an gegenüberliegenden Längsrändern angeordneten Stützelementen durch die Steuerungsmittel synchronisiert ist. Bei dieser Ausführungsform werden unterschiedlichen Längsrändern des Grundkörpers zugeordnete Stützelemente mittels des jeweiligen Verstellantriebs synchron zueinander verstellt. Diese Ausführungsform ist besonders dann vorteilhaft, wenn beispielsweise Lagerplätze beiderseits einer Regalgasse, in der sich das Lastaufnahmemittel befindet, mit gleichartigen Lasten in einem gleichartigen Belegungszustand belegt sind, beispielsweise also die Lagerplätze beiderseits der Regalgasse ausschließlich mit Euro-Paletten oder ausschließlich mit Industriepaletten belegt sind.

Eine außerordentlich vorteilhafte Weiterbildung der Erfindung sieht eine Speichereinrichtung vor, in der Belegungsinformationen über die Belegung von Lagerplätzen der Regalanordnung abspeicherbar sind, wobei die Speichereinrichtung mit den Steuerungsmitteln derart in Datenübertragungsverbindung steht, daß in Abhängigkeit von der Belegungsinformation ein dem Stützelement zugeordneter Verstellantrieb oder dem Stützelement zugeordnete Verstellantriebe durch die Steuerungsmittel ansteuerbar ist bzw. sind. Bei dieser Ausführungsform sind in der Speichereinrichtung, die beispielsweise Teil eines logistischen Zentralrechners eines Regallagers sein kann, Belegungsinformationen abgespeichert, aus denen für die einzelnen Lagerplätze in dem Regallager hervorgeht, ob und mit welcher Art von Last, beispielsweise einer Euro-Palette oer einer Industriepalette, der Lagerplatz belegt ist. Diese Belegungsinformationen können von der Steuerungseinrichtung ausgewertet werden, die die Verstellantriebe der Stützelemente daraufhin derart ansteuert, daß sich die Stützelemente in Längsrichtung des Lastaufnahmemittels in einer Position befinden, in der sie sich beispielsweise nach einem Ausfahren an der Regalanordnung abstützen können. Die entsprechende Verstellung der Stützelemente kann bei dieser Ausführungsform erfolgen, während sich das Lastaufnahmemittel zu dem jeweiligen Lagerplatz bewegt. Auf diese Weise vollzieht sich die Verstellung der Stützelemente entlang des jeweiligen Längsrandes zeitgleich mit der Bewegung des Lastaufnahmemittels, so daß der Ein- und Auslagerungsvorgang besonders zeitsparend gestaltet ist.

Eine andere vorteilhafte Weiterbildung der Erfindung sieht vorzugsweise an dem Grundkörper angeordnete Belegungserkennungsmittel vor zur Erkennung der Belegung von Lagerplätzen der Regalanordnung. Bei dieser Ausführungsform wird die Belegung eines jeweiligen Lagerplatzes durch die Belegungserkennungsmittel erkannt. Anhand eines Ausgangssignales der Belegungserkennungsmittel können die Steuerungsmittel dann die Verstellung des Stützelementes oder der Stützelemente steuern. Wird beispielsweise erkannt, daß an dem jeweiligen Lagerplatz Euro-Paletten eingelagert sind, so wird ein geringer Abstand der Stützelemente eingestellt. Demgegenüber wird ein größerer Abstand der Stützelemente eingestellt, wenn erkannt wird, daß sich an dem jeweiligen Lagerplatz Industriepaletten befinden.

Zweckmäßigerweise sind die Stützelemente oder ist wenigstens eines der Stützelemente in Bezug auf den jeweiligen Längsrand ein- bzw. ausfahrbar.

Das erfindungsgemäße Lastaufnahmemittel kann zur Ein- bzw. Auslagerung von Lasten zusammen mit beliebigen Regalanordnungen verwendet werden. Zweckmäßigerweise ist die Regalanordnung jedoch als Hochregallager ausgebildet, wie dies eine vorteilhafte Weiterbildung der Erfindung vorsieht.

Die Erfindung wird nachfolgend unter Bezugnahme auf die beigefügte stark schematisierte Zeichnung anhand eines Ausführungsbeispiels näher erläutert. Dabei bilden alle beschriebenen, in der Zeichnung dargestellten und in den Patentansprüchen beanspruchten Merkmale für sich genommen sowie in beliebiger Kombination miteinander den Gegenstand der Erfindung, unabhängig von ihrer Zusammenfassung in den Patentansprüchen und deren Rückbeziehung sowie unabhängig von ihrer Beschreibung bzw. Darstellung in der Zeichnung.

Es zeigt:
- Fig. 1: stark schematisiert und skizzenhaft eine Perspektivansicht eines Ausführungsbeispieles eines erfindungsgemäßen Lastaufnahmemittels,
- Fig. 2: eine schematische Perspektivansicht des Ausführungsbeispiels gemäß Fig. 1 im Zusammenhang mit einem Regal eines Hoch-' regallagers,
- Fig. 3: eine Perspektivansicht einer Einzelheit des Ausführungsbeispiels gemäß Fig. 2 im Bereich eines Stützelementes,
- Fig. 4: eine Seitenansicht des Lastaufnahmemittels während eines Einlagerungsvorganges,
- Fig. 5: in gleicher Darstellung wie Fig. 4 eine Einzelheit im Bereich eines Stützelementes vor Beginn eines Einlagerungs- oder Auslagerungsvorganges,
- Fig. 6: in gleicher Darstellung wie Fig. 5 das Stützelement während eines Einlagerungs- bzw. Auslagerungsvorganges,
- Fig. 7: eine stark schematisierte Seitenansicht eines mit verschiedenen Paletten belegten Regales einer Regalanordnung und
- Fig. 8: eine Einzelheit des Ausführungsbeispiels gemäß Fig. 2 im Bereich eines der Auflageelemente.

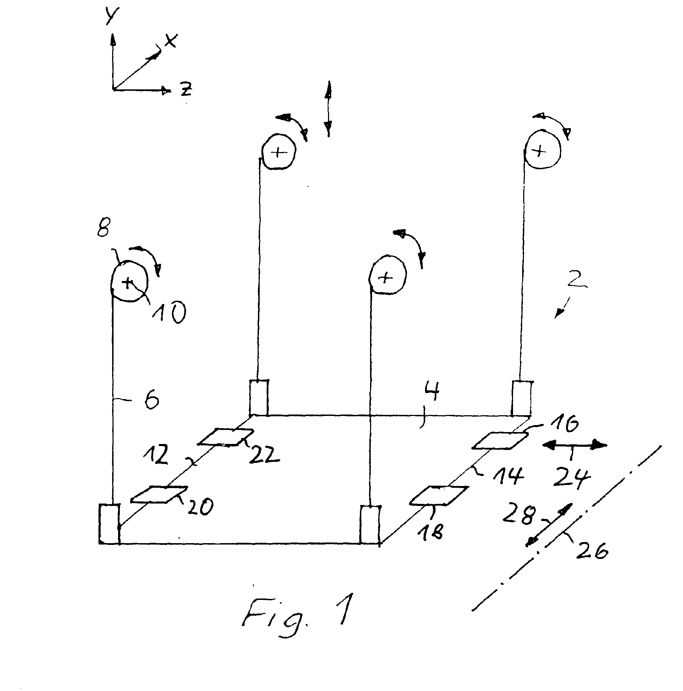

In Fig. 1 ist stark schematisiert ein Ausführungsbeispiel eines erfindungsgemäßen Lastaufnahmemittels 2 dargestellt, das beispielsweise dazu dienen kann, Lasten an Lagerplätzen eines Hochregallagers einzulagern bzw. die Lasten auszulagern. Das Lastaufnahmemittel 2 weist einen Grundkörper 4 auf, der bei diesem Ausführungsbeispiel an vier Tragseilen aufgehängt ist, von denen in Fig. 1 lediglich eines mit dem Bezugszeichen 6 versehen ist. Die Funktion der übrigen Tragseile' ist zu dem Tragseil 6 entsprechend, so daß nachfolgend ausschließlich das Tragseil 6 näher erläutert wird.

Zum Anheben bzw. Absenken des Lastaufnahmemittels 4 sind Mittel zum Auf- und Abwickeln des Tragseiles 6 vorgesehen, die bei diesem Ausführungsbeispiel durch eine Wickeltrommel 8 gebildet sind, die mittels eines nicht dargestellten Elektromotors um eine Drehachse 10 drehantreibbar ist. Bei Benutzung werden die dem Tragseil 6 sowie den übrigen Tragseilen zugeordneten Wikkeltrommeln 8 synchron drehangetrieben, so daß entsprechend der jeweiligen Drehrichtung der Wickeltrommeln 8 das Lastaufnahmemittel 2 angehoben bzw. gesenkt wird. Auf diese Weise ist eine Hubachse (y-Achse) definiert. Die Wickeltrommeln 8 sind an einer krankatzenartigen Aufhängung angeordnet (nicht dargestellt), mittels derer das Lastaufnahmemittel 2 in x- und z-Richtung verfahrbar ist, so daß das Lastaufnahmemittel im Ergebnis dreidimensional relativ zu einer Regalanordnung (in Fig. 1 nicht dargestellt) verfahrbar ist, um Lasten an bzw. von Lagerplätzen einer Regalanordnung ein- bzw. auszulagern.

Um während eines Ein- bzw. Auslagerungsvorganges Lasten von dem Lastaufnahmemittel 2 zu einem Lagerplatz bzw. von einem Lagerplatz auf das Lastaufnahmemittel 2 zu bewegen, ist das Lastaufnahmemittel 2 mit einer geeigneten Lastaufnahmevorrichtung, beispielsweise einer Gabelanordnung oder einem Satellitenfahrzeug, versehen. Entsprechende Lastaufnahmevorrichtungen sind dem Fachmann allgemein bekannt und werden daher hier nicht näher erläutert.

Das Lastaufnahmemittel weist ferner an gegenüberliegenden Längsrändern 12, 14 des Grundkörpers 4 angeordnete Stützelemente 16, 18, 20, 22 zur Abstützung des Grundkörpers 4 an der Regalanordnung während eines Ein- und Auslagerungsvorganges auf.

Soweit nachfolgend lediglich eines der Stützelemente 16, 18, 20, 22 näher erläutert wird, sind die übrigen Stützelemente in ihrem Aufbau und in ihrer Funktion entsprechend ausgebildet und werden daher nicht näher erläutert.

Das Stützelement 16 ist in Bezug auf den zugeordneten Längsrand 14 ein- bzw. ausfahrbar. Während eines Transportvorganges mit auf dem Lastaufnahmemittel 2 aufgenommener Last ist das Stützelement 16 eingefahren, so daß es bündig mit dem Längsrand 14 abschließt oder zum Inneren des Lastaufnahmemittels 2 gegenüber dem Längsrand 14 zurückspringt. Auf diese Weise ist vermieden, daß das Stützelement 16 während eines Transportvorganges, bei dem sich das Lastaufnahmemittel 2 vertikal und/oder horizontal durch eine Regalgasse bewegt, mit Teilen der Regalanordnung kollidiert.

Demgegenüber steht das Stützelement 16 während eines Lastaufnahme- bzw. Abgabevorganges über den Längsrand 14 hervor, wie in Fig. 1 dargestellt. Die Ein- bzw. Ausfahrbarkeit des Stützelementes 16 ist in Fig. 1 durch einen Doppelpfeil 24 symbolisiert.

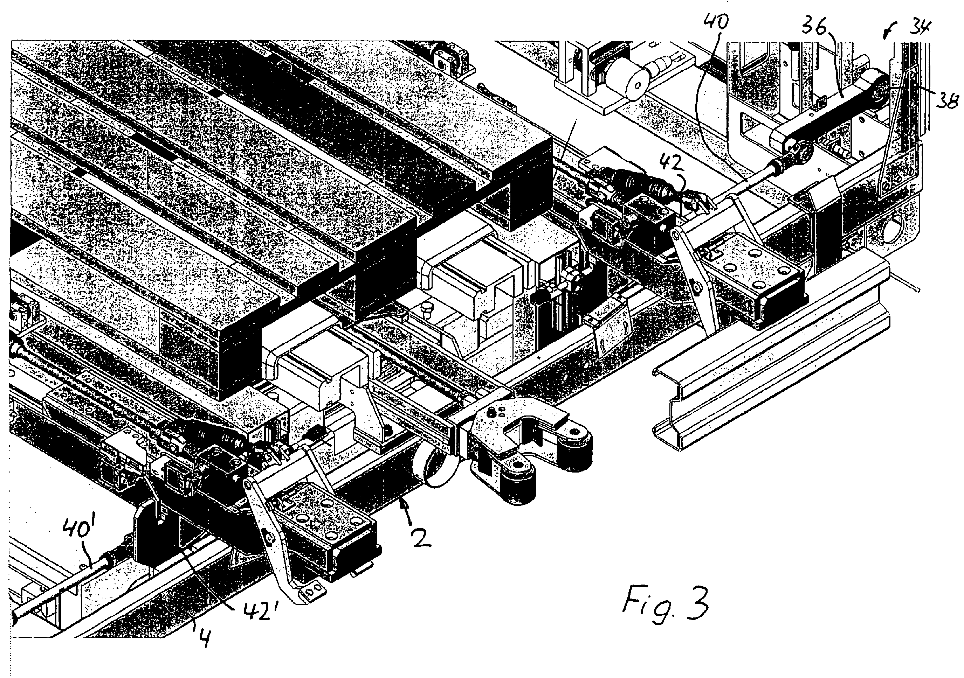

Erfindungsgemäß sind das Stützelement 16 sowie die weiteren Stützelemente 18, 20 und 22 entlang des jeweiligen Längsrandes 14 bzw. 12 verstellbar. Bei dem dargestellten Ausführungsbeispiel ist das Stützelement 16 entlang einer zu dem Längsrand 14 im wesentlichen parallel verlaufenden linearen Verstellachse, die in Fig. 1 durch eine strichpunktierte Linie 26 symbolisiert ist, in Richtung eines Doppelpfeiles 28 verstellbar. Zur Verstellung entlang der linearen Verstellachse 26 ist dem Stützelement 16 ein Verstellantrieb zugeordnet, der bei diesem Ausführungsbeispiel als elektromotorischer Verstellantrieb ausgebildet ist und weiter unten anhand von Fig. 3 näher erläutert wird.

Bei dem dargestellten Ausführungsbeispiel sind sämtliche Stützelemente 16, 18, 20, 22 jeweils ein- bzw. ausfahrbar sowie mittels eines zugeordneten Verstellantriebs entlang der linearen Verstellachse 28 verstellbar. Die Ansteuerung der Verstellantriebe erfolgt durch geeignete Steuerungsmittel. Die Steuerungsmittel können beispielsweise eine an dem Lastaufnahmemittel 2 angeordnete Steuerung aufweisen. Es ist erfindungsgemäß jedoch auch möglich, daß die Steuerungsmittel durch einen Zentralrechner eines Lagers, in dem das Lastaufnahmemittel 2 verwendet wird, gebildet ist.

Durch die Steuerungsmittel ist einerseits das Ein-und Ausfahren der Stützelemente 16, 18, 20, 22 synchronisiert, und zwar derart, daß sich während des Transportes einer Last die Stützelemente 16, 18, 20, 22 im eingefahrenen Zustand befinden. Ferner ist eine Bewegung der Stützelemente 16, 18, 20, 22 entlang der Verstellachse 26 so synchronisiert, daß bezogen auf die Längsränder 12, 14 gegenüberliegend angeordnete Stützelemente 16 und 22 bzw. 18, 20 in Richtung des Doppelpfeiles 28 synchron zueinander verstellt werden.

Ein Lastein- bzw. Auslagerungsvorgang vollzieht sich mittels des erfindungsgemäßen Lastaufnahmemittels 2 wie folgt:

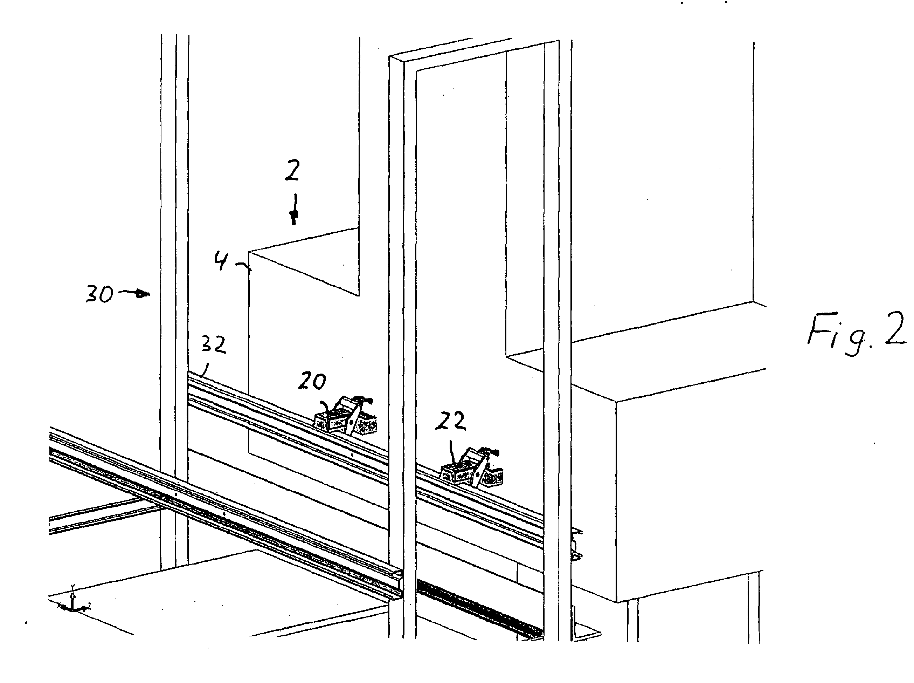

Zum Einlagern an einer Lastaufnahmestelle eines Lagers aufgenommenen Last wird das Lastaufnahmemittel 2 in x-, y- und z-Richtung so verfahren, daß es vor einem Lagerplatz, an dem die Last eingelagert werden soll, angeordnet ist. Wie in Fig. 2 dargestellt, weist die Regalanordnung 30 ein Profilelement 32 auf, auf dem sich das Lastaufnahmemittel mittels der Stützelemente 20, 22 abstützt.

Befindet sich das Lastaufnahmemittel 2 vor einem Lagerplatz, an dem eine auf dem Lastaufnahmemittel 2 aufgenommene Last eingelagert werden soll, so ist das Lastaufnahmemittel 2 in Vertikalrichtung zunächst so positioniert, daß sich die Stützelemente 20, 22 oberhalb des Profilelementes 32 befinden.

In dieser Position des Lastaufnahmemittels 2 werden die Stützelemente 20, 22 ausgefahren und das Lastaufnahmemittel 2 abgesenkt, so daß die Stützelemente 16, 18 auf dem Profilelement 32 zur Auflage gelangen und sich das Lastaufnahmemittel 2 somit mittels der Stützelemente 20, 22 auf dem Profilelement 32 abstützt.

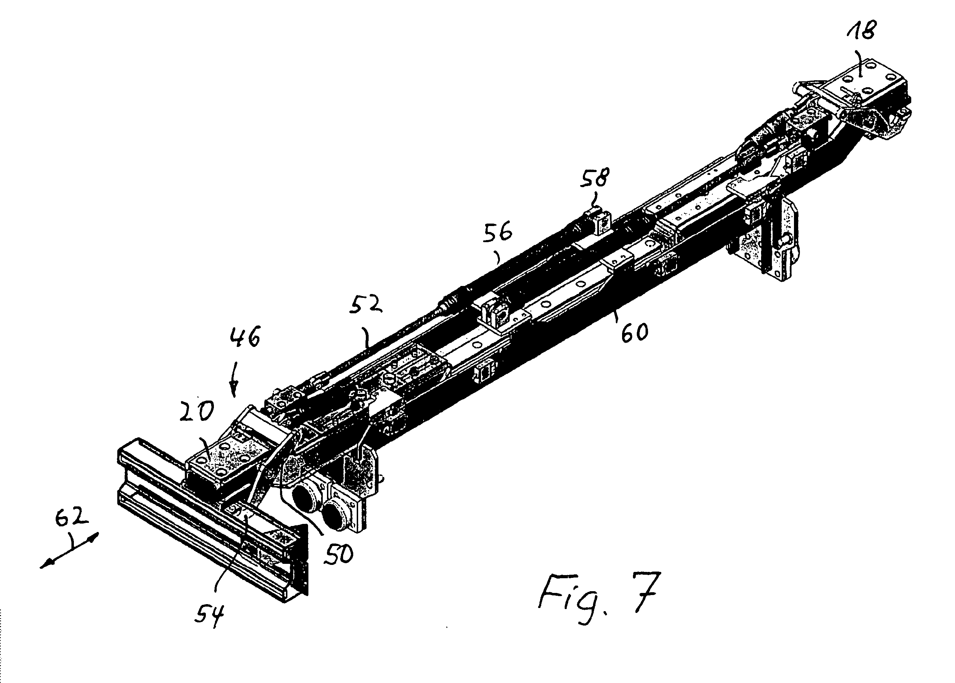

Der Abstand der Stützelemente 20, 22 in Längsrichtung des Profilelementes 32 ist hierbei so eingestellt, daß beim Ausfahren der Stützelemente 20, 22 eine Kollision mit Teilen der Regalanordnung 30 oder an Lagerplätzen der Regalanordnung 32 angeordneten Lasten vermieden ist. Dieser Vorgang wird weiter unten anhand von Fig. 7 näher erläutert.

Fig. 3 zeigt Einzelheiten eines Verstellantriebs 34, der dem Stützelement 16 zur Verstellung entlang der linearen Verstellachse 26 zugeordnet ist.

Bei dem dargestellten Ausführungsbeispiel weist der Verstellantrieb 34 einen Schwenkhebel 36 auf, der mittels eines nicht dargestellten Elektromotors um eine Schwenkachse 38 schwenkbar ist. Mit dem der Schwenkachse 38 abgewandten Ende des Schwenkhebels 36 ist gelenkig und um eine zu der Schwenkachse 38 parallele Schwenkachse ein stangenartiges Element 40 verbunden, mit dessen der Schwenkachse 38 abgewandten Ende gelenkig eine Lasche verbunden ist (vgl. das Bezugszeichen 42' bei dem Stützelement 18), die ihrerseits entlang der linearen Verstellachse 26 verschiebefest mit dem Stützelement 16 verbunden ist.

Bei einem Verschwenken des Schwenkhebels 36 um die Schwenkachse 38 führt das Stützelement 16 somit entsprechend der Schwenkrichtung des Schwenkhebels 36 eine Bewegung entlang der linearen Verstellachse 26 in der einen oder anderen Richtung aus. Auf diese Weise ist die Position des Stützelementes 16 entlang des Längsrandes 14 einstellbar. Zum Ein- bzw. Ausfahren der Stützelemente 16 ist eine geeignete Verstellmechanik vorgesehen, die jedoch unabhängig von der Erfindung ist und daher hier nicht näher erläutert wird. Entsprechendes gilt auch für die Stützelemente 18, 20, 22.

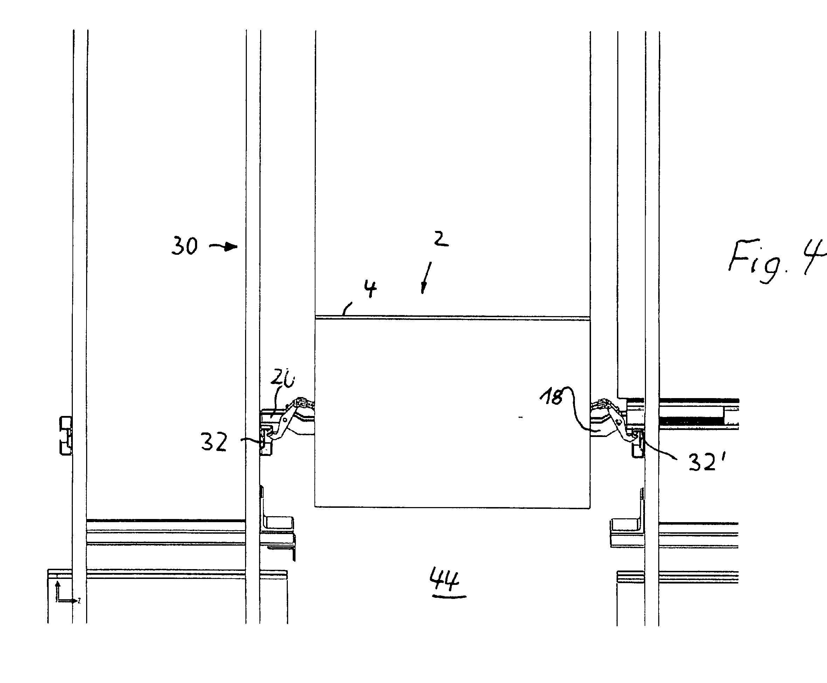

Fig. 4 zeigt das Lastaufnahmemittel 2 in einer Ein- bzw. Auslagerungsposition, in der es sich mittels der Stützelemente 20, 22 an dem Profilelement 32 und mittels der Stützelemente 16, 18 an einem zu dem Profilelement 32 parallelen und beabstandeten Profilelement 32' abstützt, wobei in Fig. 4 lediglich die Stützelemente 18, 20 erkennbar sind. In der in Fig. 4 dargestellten Einlagerungs- bzw. Auslagerungsposition befindet sich das Lastaufnahmemittel 2 in einer Regalgasse 44 der Regalanordnung 30. In der Ein- bzw. Auslagerungsposition werden an dem Lastaufnahmemittel 2 auftretende Kräfte über die Profilelemente 32, 32' in die Regalanordnung 30 eingeleitet und von dieser aufgenommen.

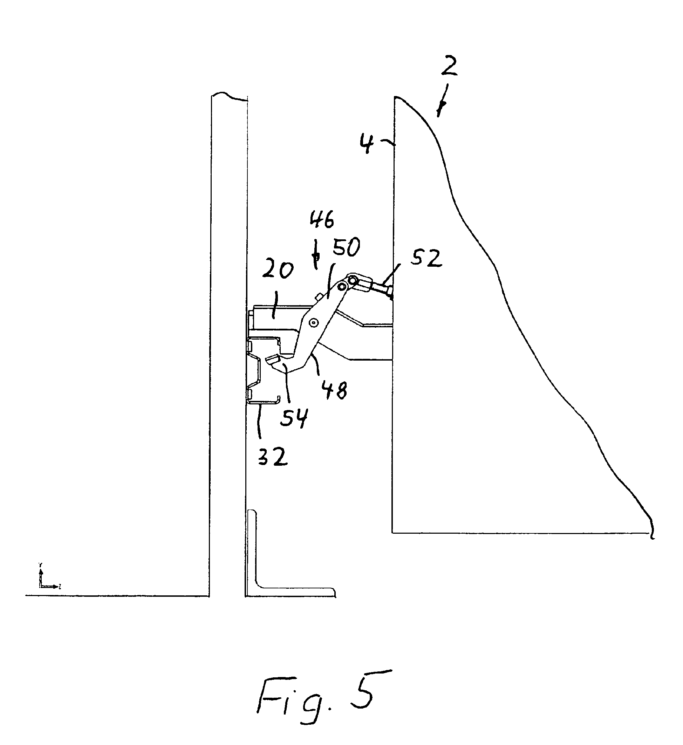

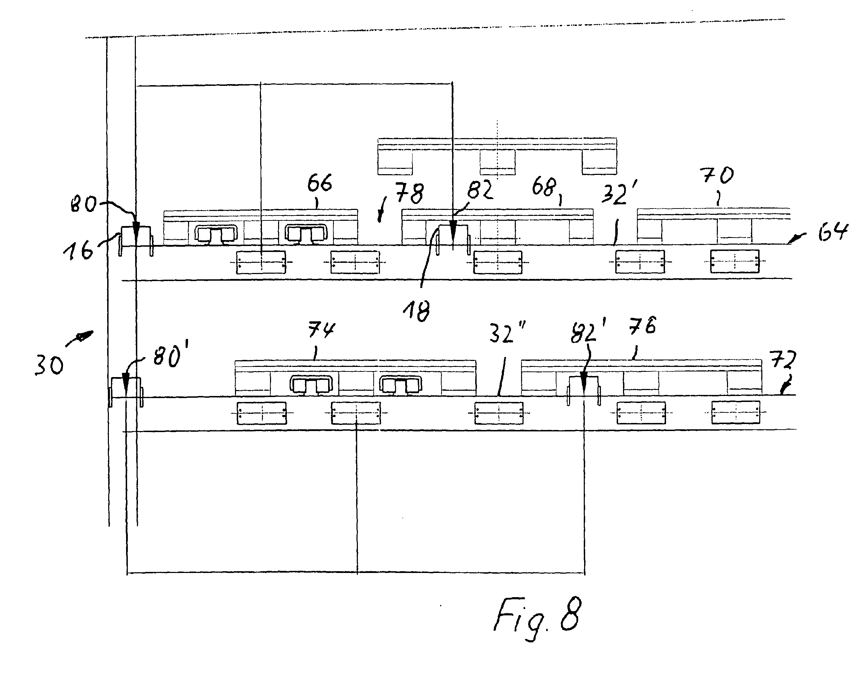

Fig. 5 zeigt eine Einzelheit aus dem Bereich des Stützelementes 20 und des Profilelementes 32, wobei zunächst erkennbar ist, daß das Profilelement 32 einen Sigma-artigen Querschnitt aufweist. Bei dem dargestellten Ausführungsbeispiel ist dem Stützelement 20 ein Unterstützungselement 46 zugeordnet, das in seiner Eingriffsposition im wesentlichen verhindert, daß das Profilelement 32 aufgrund von durch das Stützelement 20 eingeleiteten Kräften durch Torsion verformt und hierbei ggf. beschädigt wird. Das Unterstützungselement 46 ist bei diesem Ausführungsbeispiel als zweiarmiger Hebel 48 ausgebildet, der entfernt von seinen Enden um eine horizontale Schwenkachse schwenkbar an dem Stützelement 20 entfernt von dessen freiem Ende gelagert ist. Ein Ende 50 des Hebels 48 ist gelenkig mit einem Kolben 52 einer weiter unten von Fig. 8 näher erläuterten Kolben-Zylinder-Anordnung verbunden, während das andere Ende 54 des Hebels 48 hakenartig und an seinem freien Ende abgeflacht ausgebildet ist. Fig. 5 zeigt das Unterstützungselement 46 in einer Position, in der es sich außer Eingriff befindet. Um das Unterstützungselement 46 in seine Eingriffsposition zu bringen, wird die Kolben-Zylinder-Anordnung so betätigt, daß sich der Zylinder 52 in Fig. 5 nach rechts bewegt, so daß der Hebel 48 in Fig. 5 im Uhrzeigersinn verschwenkt, bis das abgeflachte freie Ende 54 des Hebels 48 an der Unterseite des Schenkels des Sigma-artigen Profiles zur Anlage gelangt, auf dessen Oberseite sich das Stützelement 20 abstützt.

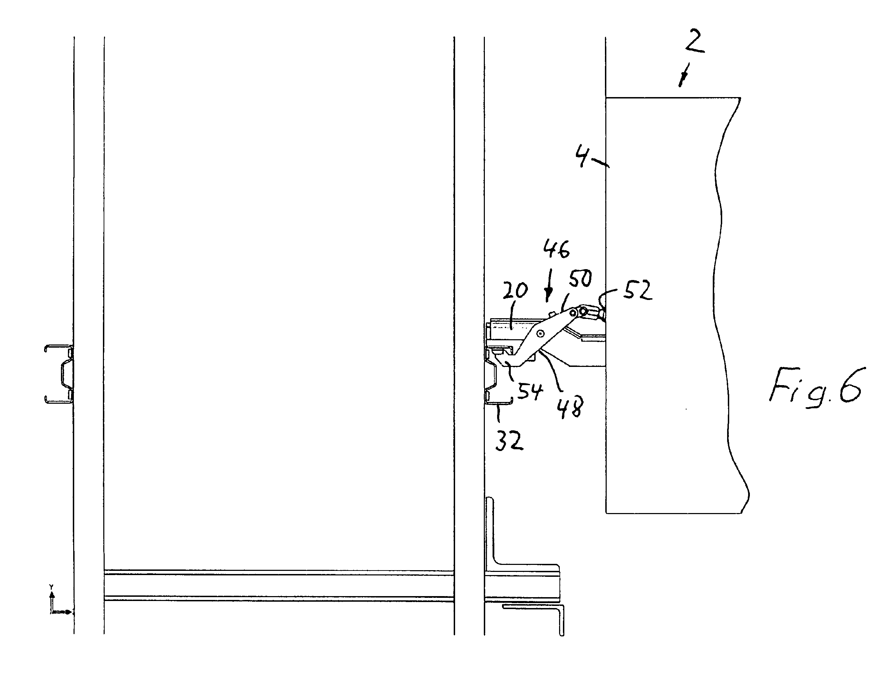

Fig. 6 zeigt das Unterstützungselement 48 in seiner Eingriffsposition, in der der obere Schenkel des Sigma-artigen Querschnittes des Profilelementes 32 zwischen dem Stützelement 20 und dem Unterstützungselement 46 aufgenommen ist. In dieser Unterstützungsposition ist das Profilelement 32 vor einer Verformung durch Torsion geschützt.

Fig. 7 zeigt eine Perspektivansicht einer Einzelheit im Bereich des Unterstützungselementes 46. Wie aus Fig. 7 ersichtlich ist, weist die Kolben-Zylinder-Anordnung neben dem Kolben 52 einen Zylinder 56 auf, der als Hydraulik- oder Pneumatikzylinder ausgebildet sein kann. Das dem Kolben 52 abgewandte Ende des Zylinders 56 ist gelenkig an einem Schwenklager 58 gelagert, das ortsfest an einem Profilelement 60 angeordnet ist, an dem das Stützelement 20 in Richtung eines Doppelpfeiles 62 ein- und ausfahrbar gelagert ist. Die Ansteuerung eines Antriebes zum Ein- bzw. Ausfahren des Stützelementes 20 sowie der Kolben-Zylinder-Anordnung 52, 56 erfolgt durch die Steuerungsmittel, die in der oben beschriebenen Weise darüber hinaus eine Verstellung des Stützelementes 20 entlang seiner linearen Verstellachse steuern. Die Steuerungsvorgänge sind hierbei so koordiniert, daß das Stützelement 20 und das Unterstützungselement 46 jeweils die erforderliche Position einnehmen.

Fig. 8 verdeutlicht die Funktion des erfindungsgemäßen Lastaufnahmemittels anhand eines Beispiels, bei dem auf einem ersten Regalboden 64 der Regalanordnung 30 nebeneinander Euro-Paletten 66, 68, 70 gelagert sind, während auf einem darunter angeordneten Regalboden Industriepaletten 74, 76 gelagert sind.

Soll mittels des erfindungsgemäßen Lastaufnahmemittels 2 die Euro-Palette 66 von dem Regalboden 64 entnommen werden, so werden die Stützelemente 16, 18 entlang ihrer linearen Bewegungsachse so zueinander verstellt, daß sich das Stützelement 16 in Fig. 8 links und das Stützelement 18 in Fig. 8 rechts von der Palette 66 befindet. Wie in Fig. 8 dargestellt, kann das Stützelement 18 hierbei so positioniert werden, daß es sich unterhalb der Euro-Palette 68 an dem Profilelement 32' abstützt. Die Position des Stützelementes 18 kann jedoch auch so gewählt werden, daß es sich in einem Zwischenraum 78 zwischen den Euro-Paletten 66, 68 abstützt. In jedem Falle wird die Position des Stützelementes 18 so gewählt, daß beim Ausfahren eine Kollision mit einer der Euro-Paletten 66, 68, 70 oder einem Teil der Regalanordnung 30 vermieden ist. Die bei dem Beispiel gewählte Position der Stützelemente 16, 18 ist in Fig. 8 oben durch Pfeile 80, 82 gekennzeichnet.

Soll demgegenüber die Industriepalette 74 von dem Regalboden 72 entnommen werden, so würde die in Fig. 8 oben dargestellte Position 82 des Stützelementes 18 zu einer Kollision mit der Industriepalette 74 führen. Die Steuereinrichtung steuert daher den dem Stützelement 18 zugeordneten Verstellantrieb 18 derart an, daß sich das Stützelement 18 in Fig. 8 nach rechts bewegt und die in Fig. 8 unten durch einen Pfeil 82' gekennzeichnete Position einnimmt, in der sich das Stützelement 18 an einem Profilelement 32'' der Regalanordnung 30 abstützt. Wie in Fig. 8 unten dargestellt, nimmt das Stützelement 16 bei der Entnahme der Industriepalette 74 eine durch einen Pfeil 80' gekennzeichnete Position ein.

Während des zuvor beschriebenen Auslagerungsvorganges befindet sich das Lastaufnahmemittel 2 in einer Regalgasse der Regalanordnung 30. Die Stützelemente 20, 22 stützen sich hierbei auf der den Regalböden 64, 72 abgewandten Seite der Regalgasse an einem Profilelement der Regalanordnung 30 ab.

Aufgrund der erfindungsgemäß vorgesehenen Verstellbarkeit der Stützelemente 16, 18, 20, 22 jeweils entlang einer linearen Verstellachse ist mit dem erfindungsgemäßen Lastaufnahmemittel 2 eine Ein- und Auslagerung von Lasten in Regalanordnungen ermöglicht, in denen Lasten unterschiedlicher Abmessungen, beispielsweise Paletten unterschiedlicher Breite, eingelagert sind.

Erfindungsgemäß kann eine Speichereinrichtung vorgesehen sein, in der Belegungsinformationen über die Belegung von Lagerplätzen der Regalanordnung abspeicherbar sind, wobei die Speichereinrichtung mit den Steuerungsmitteln derart in Datenübertragungsverbindung steht, daß in Abhängigkeit von Belegungsinformationen Verstellantriebe der Stützelemente 16, 18, 20, 22 durch die Steuerungsmittel ansteuerbar sind. Die Verstellung der Stützelemente 16, 18, 20, 22 kann beispielsweise erfolgen, während sich das Lastaufnahmemittel zu einem Lagerplatz bewegt, an dem bzw. von dem eine Last ein- bzw. ausgelagert werden soll.

Es ist erfindungsgemäß auch möglich, daß vorzugsweise an dem Grundkörper des Lastaufnahmemittels Belegungserkennungsmittel vorgesehen sind zur Erkennung der Belegung von Lagerplätzen der Regalanordnung.

## Patentansprüche

1. Lastaufnahmemittel zur Ein- und Auslagerung von Lasten an bzw. von Lagerplätzen einer Regalanordnung, mit einem an Tragseilen aufgehängten Grundkörper und mit an gegenüberliegenden Längsrändern des Grundkörpers angeordneten Stützelementen zur Abstützung des Grundkörpers an der Regalanordnung während eines Ein- und Auslagerungsvorganges,
**dadurch gekennzeichnet,**
**daß** wenigstens eines der Stützelemente (16, 18, 20, 22) entlang des jeweiligen Längsrandes (12, 14) verstellbar ist und
**daß** dem wenigstens einen Stützelement (16, 18, 20, 22) ein Verstellantrieb zugeordnet ist.

2. Lastaufnahmemittel nach Anspruch 1, **dadurch gekennzeichnet, daß** das Stützelement (16, 18, 20, 22) entlang einer linearen Verstellachse (26) verstellbar ist.

3. Lastaufnahmemittel nach Anspruch 2, **dadurch gekennzeichnet, daß** die lineare Verstellachse (26) zur Längsmittelebene des Grundkörpers (4) im wesentlichen parallel verläuft.

4. Lastaufnahmemittel nach einem der vorhergehenden Ansprüche, **dadurch gekennzeichnet, daß** der Verstellantrieb ein elektromotorischer Verstellantrieb ist.

5. Lastaufnahmemittel nach einem der vorhergehenden Ansprüche, **dadurch gekennzeichnet, daß** an wenigstens einem der Längsränder (12, 14) des Grundkörpers wenigstens zwei entlang des Längsrandes (12, 14) verstellbare Stützelemente (16, 18, 20, 22) vorgesehen sind.

6. Lastaufnahmemittel nach einem der vorhergehenden Ansprüche, **dadurch gekennzeichnet, daß** an jedem der Längsränder (12, 14) wenigstens ein entlang des jeweiligen Längsrandes (12, 14) verstellbares Stützelement (16, 18, 20, 22) angeordnet ist.

7. Lastaufnahmemittel nach einem der vorhergehenden Ansprüche, **gekennzeichnet durch** Steuerungsmittel zur Ansteuerung des Verstellantriebes bzw. der Verstellantriebe.

8. Lastaufnahmemittel nach Anspruch 7, **dadurch gekennzeichnet, daß** eine Verstellung von wenigstens zwei an gegenüberliegenden Längsrändern (12, 14) angeordneten Stützelementen (16, 18, 20, 22) durch die Steuerungsmittel synchronisiert ist.

9. Lastaufnahmemittel nach einem der vorhergehenden Ansprüche, **dadurch gekennzeichnet, daß** eine Speichereinrichtung vorgesehen ist, in der Belegungsinformationen über die Belegung von Lagerplätzen der Regalanordnung (30) abspeicherbar sind und daß die Speichereinrichtung mit den Steuerungsmitteln derart in Datenübertragungsverbindung steht, daß in Abhängigkeit von den Belegungsinformationen ein dem Stützelement (16, 18, 20, 22) zugeordneter Verstellantrieb oder den Stützelementen (16, 18, 20, 22) zugeordnete Verstellantriebe durch die Steuerungsmittel ansteuerbar ist bzw. sind.

10. Lastaufnahmemittel nach einem der vorhergehenden Ansprüche, **dadurch gekennzeichnet, daß** vorzugsweise an dem Grundkörper (4) angeordnete Belegungserkennungsmittel vorgesehen sind zur Erkennung der Belegung von Lagerplätzen der Regalanordnung (30).

11. Lastaufnahmemittel nach einem der vorhergehenden Ansprüche, **dadurch gekennzeichnet, daß** die Stützelemente (16, 18, 20, 22) oder wenigstens eines der Stützelemente (16, 18, 20, 22) in Bezug auf den jeweiligen Längsrand (12, 14) ein- bzw. ausfahrbar sind bzw. ist.

12. Lastaufnahmemittel nach einem der vorhergehenden Ansprüche, **dadurch gekennzeichnet, daß** die Regalanordnung als Hochregallager (30) ausgebildet ist.

## Claims

1. Load bearing means for loading and unloading loads into or out of the storage areas of a shelf assembly,
comprising a base body suspended on support cables and
comprising support elements arranged on opposite longitudinal edges of the base body for supporting the base body on the shelf assembly during the loading and unloading process,
**characterised in that**
at least one of the support elements (16, 18, 20, 22) can be adjusted along the respective longitudinal edge (12, 14) and
**in that** an adjusting drive is assigned to the at least one support element (16, 18, 20, 22).

2. Load bearing means according to claim 1, **characterised in that** the support element (16, 18, 20, 22) can be adjusted along a linear adjusting axis (26).

3. Load bearing means according to claim 2, **characterised in that** the linear adjusting axis (26) runs essentially parallel to the longitudinal middle plane of the base body (4).

4. Loading bearing means according to any one of the preceding claims, **characterised in that** the adjusting drive is an electric motor adjusting drive.

5. Load bearing means according to any one of the preceding claims, **characterised in that** on at least one of the longitudinal edges (12, 14) of the base body at least two support elements (16, 18, 20, 22) are provided which can be adjusted along the longitudinal edge (12, 14).

6. Load bearing means according to any one of the preceding claims, **characterised in that** on each of the longitudinal edges (12, 14) at least one support element (16, 18, 20, 22) is arranged which can be adjusted along the respective longitudinal edge (12, 14).

7. Load bearing means according to any one of the preceding claims, **characterised by** a control device for controlling the adjusting drive or adjusting drives.

8. Load bearing means according to claim 7, **characterised in that** the adjustment of at least two support elements (16, 18, 20, 22) arranged on opposite longitudinal edges (12, 14) is synchronised by the control device.

9. Load bearing means according to any one of the preceding claims, **characterised in that** a storage device is provided, in which information about the occupancy of the storage spaces of the shelf assembly (30) can be saved, and **in that** the storage device is connected to the control device for the transmission of data, such that as a function of the information on occupancy an adjusting drive assigned to the support element (16, 18, 20, 22) or adjusting drives assigned to the support elements (16, 18, 20,22) is or are controllable by the control device.

10. Load bearing means according to any one of the preceding claims, **characterised in that** occupancy identification means arranged preferably on the base body (4) are provided for identifying the occupancy of storage spaces of the shelf assembly (30).

11. Load bearing means according to any one of the preceding claims, **characterised in that** the support elements (16, 18, 20, 22) or at least one of the support elements (16, 18, 20, 22) can be moved in or out in relation to the respective longitudinal edge (12, 14).

12. Load bearing means according to any one of the preceding claims, **characterised in that** the shelf assembly is configured as a high shelf storage area (30).

## Revendications

1. Moyen de réception de charge pour le stockage et le déstockage de charges sur ou à partir d'emplacements de stock d'un agencement d'étagères,
comprenant un corps de base suspendu sur des câbles porteurs et des éléments de soutien disposés sur des bords longitudinaux opposés du corps de base pour le soutien du corps de base sur l'agencement d'étagères pendant une opération de stockage et de déstockage,
**caractérisé**
**en ce qu'**au moins un des éléments de soutien (16, 18, 20, 22) peut être déplacé le long du bord longitudinal (12, 14) respectif et
**en ce qu'**un entraînement de déplacement est attribué à au moins l'un des éléments de soutien (16, 18, 20, 22).

2. Moyen de réception de charge selon la revendication 1, **caractérisé en ce que** l'élément de soutien (16, 18, 20, 22) peut être déplacé le long d'un axe de déplacement (26) linéaire.

3. Moyen de réception de charge selon la revendication 2, **caractérisé en ce que** l'axe de déplacement (26) linéaire est agencé sensiblement parallèlement au plan médian longitudinal du corps de base (4).

4. Moyen de réception de charge selon l'une des revendications précédentes, **caractérisé en ce que** l'entraînement de déplacement est un entraînement de déplacement par moteur électrique.

5. Moyen de réception de charge selon l'une des revendications précédentes, **caractérisé en ce qu'**au moins deux éléments de soutien (16, 18, 20, 22) déplaçables le long du bord longitudinal (12, 14) sont prévus sur au moins l'un des bords longitudinaux (12, 14) du corps de base.

6. Moyen de réception de charge selon l'une des revendications précédentes, **caractérisé en ce qu'**au moins un élément de soutien (16, 18, 20, 22) déplaçable le long du bord longitudinal (12, 14) respectif est disposé sur chacun des bords longitudinaux (12, 14).

7. Moyen de réception de charge selon l'une des revendications précédentes, **caractérisé par** des moyens de commande pour l'activation de l'entraînement de déplacement ou des entraînements de déplacement.

8. Moyen de réception de charge selon la revendication 7, **caractérisé en ce qu'**un déplacement d'au moins deux éléments de soutien (16, 18, 20, 22) disposés sur des bords longitudinaux (12, 14) opposés est synchronisé par les moyens de commande.

9. Moyen de réception de charge selon l'une des revendications précédentes, **caractérisé en ce qu'**il est prévu un système de mémoire dans lequel des informations d'occupation concernant l'occupation d'emplacements de stock de l'agencement d'étagères (30) peuvent être mémorisées et **en ce que** le dispositif de mémoire est en liaison de transmission de données avec les moyens de commande de telle sorte que, en fonction des informations d'occupation, un entraînement de déplacement attribué à l'élément de soutien (16, 18, 20, 22) ou des entraînements de déplacement attribués aux éléments de soutien (16, 18, 20, 22) peut ou peuvent être actionné(s) par les moyens de commande.

10. Moyen de réception de charge selon l'une des revendications précédentes, **caractérisé en ce que** des moyens de reconnaissance d'occupation disposés de préférence sur le corps de base (4) sont prévus pour l'identification d'occupation d'emplacements de stockage de l'agencement d'étagères (30).

11. Moyen de réception de charge selon l'une des revendications précédentes, **caractérisé en ce que** les éléments de soutien (16, 18, 20, 22) ou au moins l'un des éléments de soutien (16, 18, 20, 22) peut ou peuvent être entré(s) ou sorti(s) par rapport au bord longitudinal (12, 14) respectif.

12. Moyen de réception de charge selon l'une des revendications précédentes, **caractérisé en ce que** l'agencement d'étagères est conçu comme stock sur rayonnages surélevés (30).
